# EUROPEAN PATENT APPLICATION

(11) **EP 2 704 069 A1**
(43) Date of publication of application: **05.03.2014**
(21) Application number: 12306051.9
(22) Date of filing: 04.09.2012
(51) Int. Cl.: G06Q 10/10

(54) **Question and answer management system**

(71) Applicant: Alcatel Lucent, 75007 Paris (FR)
(72) Inventor: Delegue, Gérard, 91620 Nozay (FR); Squedin, Sylvain, 91620 Nozay (FR)
(74) Representative: Hervouet, Sylvie

(57) **Abstract**

A client application (3) for managing questions during a presentation comprising: a question editor module (31) for enabling an attendee (9) to edit a question: creating, modifying or enriching said question, a sender module (32) for sending to a server application (5) a question locally edited using said question editor module (31), and a receiver module (33) for receiving from said server application (5) a remotely edited question.

A server application (5) for managing questions during a presentation comprising: a collector module (52) for collecting questions received from at least one client application (3), a dispatcher module (53) for dispatching questions to at least one client application (3), a maintenance module (51) for maintaining a question repository (10) and for avoiding editing conflicts, a context management module (54) for collecting and maintaining a presentation context, a linker module (55) for linking similar questions, an ordering module (56) for ordering questions, and a context restoration module (57) for restoring a given presentation context.

## Description

### TECHNICAL FIELD

The technical field is the one of communication systems and more particularly of systems for assisting a presenter to manage questions and answers during a conference.

### BACKGROUND

In a conference, during a presentation, attendees generally have questions about said presentation. A presentation typically comprises a main display phase, when the presenter speaks. To deal with the questions of attendees a presentation may also comprise a questions and answers phase. Said questions and answers phase may take place in the same time as the display phase, thus causing interruptions that may be prejudicial to the good schedule of presentation. Said questions and answers is thus most of the time postponed to a dedicated time generally immediately following the display phase. According to the time available and the number of attendees, it may be difficult to collect and to answer in live to all questions. When multiple attendees have a question, the selection of the attendee/question is often randomized. This may not be very productive since some questions that are not of great interest to a majority of participants may be selected, while more relevant questions can be eclipsed.

The question and answer management is up to now a manual process with all the drawbacks of such way of doing.

### SUMMARY

The present disclosure is intended to provide a system able to handle live questions and to allow selecting among all the questions according to rules in order to better satisfy a greatest number of attendees.

To do so, such a system typically comprises a server application dialoguing with at least one client application interfaced with an attendee to the presentation.

An embodiment concerns a client application for managing questions during a presentation and comprising a question editor module for enabling an attendee to edit a question: creating, modifying or enriching said question, a sender module for sending to a server application a question locally edited using said question editor module, and a receiver module for receiving from said server application a remotely edited question.

According to another feature, said client application further comprises a profile adder module for adding, to an edited question, an attendee profile of an attendee which edited said question.

According to another feature, a question is enriched by adding metadata that can be edited, so as to: define semantic relations between questions, or define hierarchy between questions, or merge questions, or add vote about question's relevance, or create/modify a proposed answer.

Another embodiment concerns a server application for managing questions during a presentation and comprising a collector module for collecting questions received from at least one client application, a dispatcher module for dispatching questions to at least one client application, a maintenance module for maintaining a question repository and for avoiding editing conflicts, a context management module for collecting and maintaining a presentation context, a linker module for linking similar questions, an ordering module for ordering questions, and a context restoration module for restoring a given presentation context.

According to another feature, a presentation context comprises: name of presenter, title of presentation, support used by presenter.

According to another feature, said linker module comprises a topic extractor for extracting topics from questions, a similarity detector for detecting a level of similarity by comparing said extracted topics based on a cosine similarities method, and a grouper for grouping similar questions as denoted by a value of a cosine superior to a given threshold.

According to another feature, wherein said ordering module is designed to best match expectations of attendees and constraints of presenter.

According to another feature, said expectations of attendees are extracted from question repository by analyzing questions and/or at least some of their metadata.

According to another feature, wherein said constraints of the presenter can be defined by way of rules taking their parameters among: maximum number of questions per attendee, per location, per slides or per videos, profiles of attendees, in order to focus on or to privilege (a) given company(ies), or persons with a given position, content of questions (heterogeneous topics, questions near of a given topic), scheduling of questions (by slide, by location, by topics...).

According to another feature, said context restoration module comprises means for restoring a presentation context associated to a selected question.

According to another feature, said context restoration module further comprises means for establishing a communication between the presenter and at least one of the attendees which edited said selected question.

According to another feature, said context restoration module further comprises an introduction builder for building an introduction of an attendee from his attendee profile.

According to another feature, said context restoration module further comprises a question displayer for displaying the text of a selected question and/or any metadata associated to said selected question.

According to another feature, said context restoration module further comprises a question reader for reading a selected question, in different selective ways: by an attendee, by the presenter, or by a text to speech application.

Another embodiment concerns a system for managing questions during a presentation comprising: a server running such a server application, at least one client running such a client application, said at least one client application being located in a mobile terminal associated to an attendee, attending said presentation, a communication network allowing said at least one client application to communicate with said server application.

### BRIEF DESCRIPTION OF THE DRAWINGS

Others features, details and advantages of the invention will become more apparent from the detailed illustrating description given hereafter with respect to the drawings on which:
- figure 1 is a synoptic view of a whole system,
- figure 2 is a synoptic view detailing both server application and client application.

### DETAILED DESCRIPTION

The present disclosure aims to provide a system 1 for managing questions and answers during a presentation. Said system 1 is intended to help both a presenter 8, especially in the task of selecting which questions to answer, and the attendees 9 by taking account of their topics of interest.

One of the main ideas is to establish a social network / interactive forum, gathering the presenter 8 and the attendees 9 for a limited duration, extending at least over the duration of the presentation.

The system 1 thus comprises a computer system organized around a telecommunication network 6, in charge of helping both the presenter 8 and the attendees 9 to rationalize and optimize the questions and answers phase.

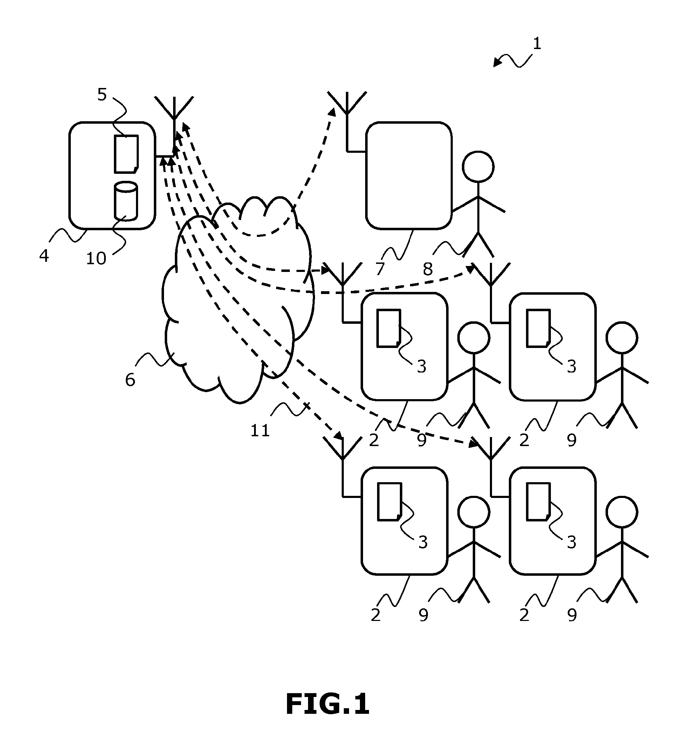

As illustrated on figure 1, said system 1 comprises a server 4 running a server application 5. The presenter 8 interacts with the system 1 e.g. through a presenter terminal 7 that may be a desktop terminal or a mobile terminal. Each attendee 9 interacts with the system 1 through a client 2 that may typically be a mobile terminal such a smartphone, a PDA, a tablet or a netbook. Said client 2 runs a client application 3 able to dialog with said server application 5.

A communication network 6 allows a dialog between the server application 5, the presenter terminal 7, and the client applications 3, and thus allows exchanges between the presenter 8 and the attendees 9, with the assistance and the value added of the system 1.

Said attendees 9 may interact with the system 1 at least all along the presentation duration. With such a system 1, the questions and answers phase may even be opened before the beginning of the effective presentation. Attendees 9 can submit questions, being aware of questions submitted by other attendees 9, modify by completing or amending said questions, enrich said questions by providing a relevance vote, propose answers, etc.

The system 1 helps by receiving submitted questions, dispatching received questions to all attendees 9, receiving amended questions, organizing questions in a question repository 10, automatically annotating each question, automatically grouping questions related to similar topic, and parallel keeping track of the presentation context.

The system 1 further helps the presenter 8 by ordering the questions according to rules provided by said presenter 8 in order to help the presenter 8 selecting the most relevant questions and by supporting the answer phase by restoring the context associated to a selected question.

To that goal, as illustrated in figure 1, said system 1 comprises a server 4, at least one client 2 and means for interconnecting, either by wire or wirelessly, said at least one client 2 to said server 4, globally figured by a communication network 6 and links 11.

Said server 4 runs a server application 5. A presenter terminal 7 allows the presenter 8 to interact with the system 1. Said presenter terminal 7 may either be a desktop terminal that may be e.g. wired to the server 4 either directly or through any communication mean or a mobile terminal that may be connected to the server 4 through a wired or wireless network, as a particular client. All these communication means 11 are globally figured by a communication network 6.

Said system 1 further comprises at least one client 2. Each client 2 is dedicated to an attendee 9, to allow said attendee 9 to interact with the system 1. Said client 2 may be a desktop terminal, e.g. provided by the conference room, or advantageously a mobile terminal 2. According to one advantageous embodiment, said mobile terminal 2 may be a personal mobile terminal owned by the attendee 9, such as its personal computer or smartphone. Each client 2 runs a client application 3 to manage interactions.

The communication network 6 may comprise several communications means 11. It may comprise wired means, and/or wireless means. Said wired means may comprise a restricted Lan access or even an open Wan/Ethernet access. Said wireless means may comprises several communication means 11 such as e.g. Wifi, Wimax, Bluetooth or a cellular phone access such as GSM, 3G, or equivalent. In case of a remote presentation, an attendee 9 is not necessarily present at the presentation location. Consequently said communication network 8 may be extended to such a case, to permit remote presence.

Said communication network 6 is to be considered as a logical means for enabling communication links 11 or several types, between clients 2, presenter terminal 7 and server 4. Said communication links 11 are established for a limited duration comprising at least the duration of the presentation. The connection access to said communication network 6 may either be open to anyone or preferentially restricted to a group of clients 2 comprising at least clients 2 of the attendees 9 and the client/terminal 7 of the presenter 8.

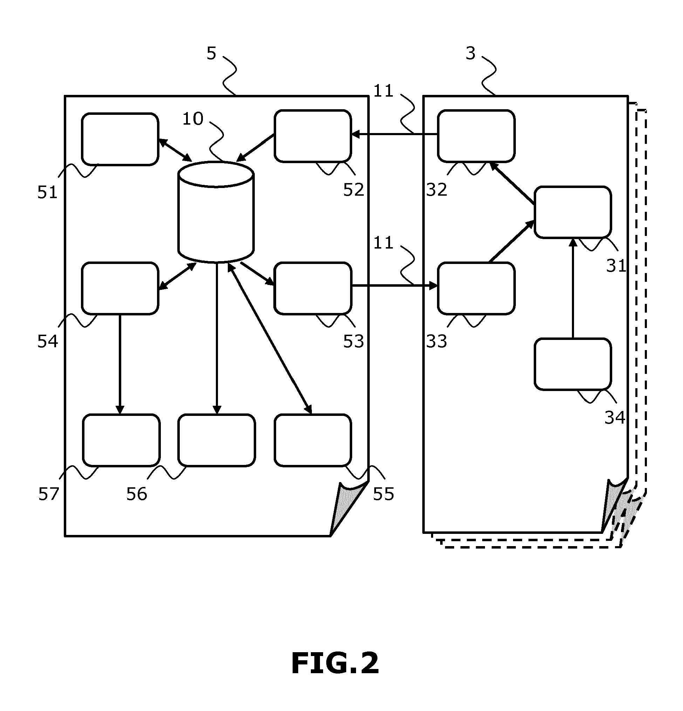

Figure 2 details the content of both server application 5 and client application(s) 3.

A part of said system 1 is a client application 3. Such a client application 3 is located and runs on a client 2. Said client application 3 comprises a man machine interface in order to interact with an attendee 9 using said client application 3. Said client application 3 is dedicated to enable said attendee 9 to actively participate to the questions and answers phase associated to a presentation.

To do so it comprises a question editor module 31, a sender module 32, and a receiver module 33. The question editor module 31 is designed to enable said attendee 9 to edit a question. Here the wording "edit" comprises creating, modifying and enriching. The attendee 9 can use said question editor module 31 to create a new question.

A question typically comprises a text message. The question editor module 31 thus comprises a text editor to allow the attendee 9 to locally create a new question by e.g. typing such a text message and amending it until the attendee 9 considers it to be satisfactory.

An application client 3 may also comprise a local question manager allowing the attendee 9 to locally store questions and thus be able to manage several questions, putting one on hold, while amending another with the question editor module 31.

When the attendee 9 decides to submit one of his questions, the sending module 32 can be used. Said sending module 32 is in charge of sending said locally edited question to another part of the system 1: the remote server application 5, through communication link 11.

On server 4 side, the server application 5 comprises a collector module 52 in charge of collecting said sent question. Once received, said question may e.g. be stored in a question repository 10. The collector module 52 is able to collect questions sent from all client applications 3 and to update said question repository 10 with said collected questions.

Each question so received and centrally collected by the server application 5 is then broadcast to all attendees 9 via their client 2. To do so the server application 5 further comprises a dispatcher module 53. Said dispatcher module 53 keeps record of the client applications 3 connected to the system 1. Each time a new question is received by the server application 5, said question is immediately broadcast to all said client applications 3.

Said broadcast may take different forms. Either said dispatcher module 53 effectively sends a full content of a question to all client applications 3 currently connected or alternately said dispatcher module 53 may notify client applications 3 of an availability of a newly created or edited question by only sending a notification comprising e.g. an abstract of said question. The attendee 9, via the client application 3, may then opt to receive or not the full content of any question said attendee 9 selects.

Alternately a question may be broadcast only to client applications 3 selectively chosen by the server application 5. Said selection may be done according to e.g. some parameters contained in an attendee profile preferentially defined for each attendee 9.

Alternately a question may be broadcast only to client applications 3 that have chosen to receive selective questions. Said selection may be done according to e.g. some parameters contained in metadata associated to each question, such as the topic. For example, a client application 3 may be configured to receive only question related to a given topic, or edited by a given attendee 9, included himself, or related to a given presentation support, etc.

On client 2 side, a client application 3 further comprises a receiver module 33. Said receiver module 33 is in charge of receiving any question/notification so broadcast by said server application 5.

Each time an attendee 9 creates a new question and sends it to the application server 5, said question is broadcast to all attendees 9. Upon receiving such a broadcast question, an attendee 9 may display said question in order to discover said question, e.g. over a display attached to the client 2. Alternately the attendee 9 may opt to store said question for later use.

By mean of the question editor module 31 of the client application 3 of the attendee, the attendee 9 may also edit a received question by either modifying or enriching said question. Both operations are related to amending a question. The wording "modify" is here to be construed as amending the text of the question itself. The wording "enrich" is here to be construed as creating or amending any metadata attached to said question.

Let us consider some examples. An attendee 9 receives a question created by another remote attendee and reads said question.

If the attendee 9 considers said received question to be rather imprecise or to be missing an important point, the attendee 9 may opt to modify the question by amending/completing the text of said question, using the question editor module 31. Here, at least two embodiments are possible. According to a first embodiment the amended text replace the former text of the question, and only the lastly edited text is kept. According to a second embodiment the amended text is appended to the former one, and the question now comprises an additional text.

If the attendee 9 considers said question to be of particular interest, the attendee 9 may opt to raise a relevance of said question. To do so the attendee 9 may e.g. add a positive vote to said question. The vote may be contained in a metadata field associated to the question. The vote is thus an enrichment of the question. A negative vote may also be applied if the question is considered to be of lesser or no interest.

If the attendee 9 considers that the answer is known, the attendee 9 may propose an answer to said question. The attendee 9 may then create a proposed answer, that is, a text, by using e.g. the question editor module 31. Said proposed answer is then automatically appended to the question. Since said proposed answer may e.g. be contained in a metadata, said operation may be called and is another example of an enrichment of a question. Said proposed answer may in turn, after being broadcast with the question, be edited by any attendee 9.

Each time a question is thus edited, the attendee 9 may opt to send said question back to the server application 5. Said server application 5 in turn dispatches said edited question to all attendees 9.

Each attendee 9 can so edit (create, modify or enrich) any question and send said edited question to the server application 5 during the course of a presentation. The server application 5 gathers all these questions so as to populate a question repository 10. Said question repository 10 thus increases and refines its content all along the presentation, due to the collaborative editing applied to questions of said question repository 10 by attendees 9.

The system 1 further comprises a profile adder module 34. Said profile adder module 34 is in charge of adding to any edited question a signature. This signature can take the form of an attendee profile. Such an attendee profile comprises at least an identifier of said attendee 9. An attendee profile, identifying a particular editor/contributor, may thus be added to a question and associated to the particular creation, modification or enrichment applied by the attendee 9 which edited said question. Such a feature advantageously allows a tracking of editions applied and of their respective authors/contributors. Said feature may also be of interest when it comes to selecting a relevant question.

As illustrated on figure 2, according to a distributed embodiment, such profile adder module 34 may be part of each client application 3 and may be able to add the attendee profile of the attendee 9 associated to the client application 3 that edited the question. According to an alternate centralized embodiment (not figured), such profile adder module 34 may be part of the server application 5.

A question may then comprise at least one question text: a first question text comprising the text of the question as initially created, and at least one following question text comprising the text of the question as successively edited. A question may further comprise at least one answer text: a first answer text comprising the text of the proposed answer as initially created, and at least one following answer text comprising the text of the answer as successively edited. Said successive texts, be it question texts or answer texts, may either be in full text form or only in differential form, keeping only the difference with respect to a reference text.

A question may further comprise other metadata associated to said question. Metadata can comprise: vote score for a question, attendee profiles of the contributive attendees that have been added and any other content or parameter useful to any of the modules, be it server or client modules.

Said metadata may be edited either by an attendee 9 e.g. by means of a question editor module 31, by the presenter 8, or by the system itself when managing questions.

Metadata are then used to add any relevant information to a question to which they are associated. A metadata may e.g. comprise at least one topic of a question, after said topic has been extracted by the system 1. Such enrichment by adding a topic metadata can be either provided by an attendee 9 manually enriching said question or provided by the system automatically enriching said question, e.g. by means of a topic extractor module/semantic analyzer.

Metadata can be used to define semantic relations between questions. In this case a metadata can be added to both related questions, said metadata comprising e.g. a type of semantic relation and a reference to the other question.

Metadata can be used to define hierarchy between questions. In this case a metadata can be added to both related questions, said metadata comprising e.g. a role among parent and child and a reference to the other question.

Metadata can be used to define grouping or linking between questions. In this case a metadata can be added to any question in a group, said metadata comprising a group identifier, or e.g. a common feature share by all the questions in said group.

Metadata can of course be used to indicate the relevance of a question. For this purpose, a metadata may comprise a vote indicator. Initialized in a neutral position said vote indicator is modified by positive or negative votes from the attendees 9, thus progressively leading to questions independently valued with a value indicative of their relevance, as estimated by the attendees 9. Said relative relevance may be used to order the questions and to take into account the expectations of the attendees 9 about the questions they globally want to be answered.

Using a client application 3 any attendee 9 to the presentation may create a new question, receive a question created, modified or enriched by another attendee 9, modifies or enriches a received question and sends it back to the server application 5, to be dispatched again and modified or enriched again and again. The process is continuous and produces a question repository 10 full of questions submitted, modified and enriched by all attendees 9, while keeping track, by means of added attendee profiles, of the amending history in relation with every contributor.

In addition of aforementioned collector module 52 and dispatcher module 53, a server application 5 may advantageously further comprise a maintenance module 51, a context management module 54, a linker module 55, an ordering module 56 and/or a context restoration module 57.

A maintenance module 51 is in charge of maintaining the question repository 10. Said maintenance module 51 receives an edited question from the collector module 52 and stores it in the question repository 10. Said maintenance module 51 provides a question to be dispatched to the dispatcher module 53. Said maintenance module 51 also manages the versions of a given question so as to avoid editing conflicts. Such editing conflicts could appear when several client applications 3 edit a same question at the same time.

A first way to avoid editing conflicts is to use a single token per question in order to allow only one client application 3 to edit said question at a time. A second way to avoid editing conflicts is to compile all editing. Several client applications 3 are allowed to edit a same question. The final question is a compilation comprising all amendments. E.g. the text of a question is amended by two client applications, the final question will comprise, the original text before any modification, the text as modified by the first client application and the text as modified by the second client application. A third way to cope with editing conflicts is to merge the modifications when possible. This corresponds to a case where the first client application and the second client application have modified either separated areas of a question or a single compilable area. Thus a final question can comprise both modifications in a single record. These three ways of managing editing conflicts can also be combined. A specific metadata with a single value may be managed using a token according to the first way, while the text of the question is managed keeping track of all edited versions according to the second way, while the vote score is managed by simply summing/compiling all the positive or negative votes according to the third way.

Said maintenance module 51 is then responsible of the coherency of said question repository 10 at any time.

A context management module 54 is in charge of collecting and maintaining in real time a presentation context. Said presentation context is an image of the presentation. It is thus dynamic in that its state evolves as the presentation takes place. A context presentation comprises information related to the current presentation and its state of schedule. A presentation context comprises constant elements such as e.g. the name of the presenter, the title of presentation, and dynamic elements such as the support (foil, photo, video, etc.) currently displayed by the presenter 8.

Such a presentation context may advantageously be used to enrich a question, in order to indicate the relevant context of the presentation to be associated to a question while said question is created, modified, enriched or submitted. This is a way to know the support, and so the part of the presentation, to which a question refers. This can be useful later, for example to select a question according to a given presentation context.

It is also useful to store a given presentation context associated to a given question to be able to restore such a presentation context when said question is selected and about to be answered. This point is detailed later on.

According to a possible embodiment, the system 1 may further comprise a presentation context dispatcher. Said presentation context dispatcher may be used for dispatching the current presentation context to client applications 3 to the attention of the attendees 9. Despites an attendee 9 can normally see a support of the presentation as displayed on the conference room display(s), it can be interesting for an attendee 9 to benefit from a repetition of said support on the display of his client 2. This is especially interesting when said client 2 is used to edit questions during the presentation, thus diverting the attention of an editing attendee 9 from said conference room display.

Despite a question is shared among the attendees 9 by said dispatcher module 53, it may occur that several attendees 9 submit identical duplicate questions, or questions similar but not expressed exactly the same way or only partly related questions. A linker module 55 may then be used to link or group such similar questions.

Such a linker module 55 typically uses a semantic analysis method to extract and compare topics of questions. To do so, said linker module 55 may comprise a topic extractor. Using said topic extractor, said linker module 55 may extract at least one topic from each question. Said linker module 55 may further comprise a similarity detector. Using said similarity detector, said linker module 55 may compute a level of similarity between at least two questions by comparing the respectively extracted topic(s). A possible implementation of such similarity detection may be based on a cosine similarities method. Any other semantic analysis method may be alternately or complementarily used. Said linker module 55 may further comprise a grouper. Said grouper is in charge of grouping similar questions, said similarity being e.g. denoted by a value of a cosine superior to a given threshold. The grouping of similar or related questions may be done by effectively creating a group gathering said questions. Alternately, said grouping may be defined by editing some metadata of the related questions. E.g. a metadata comprising a group identifier may be appended to all questions pertaining to said group.

An important function of said system 1 for managing questions during a presentation is to help the presenter 8 choosing questions to be answered. Based on the questions contained in the question repository 10 the ordering module 56 is in charge of hierarchically ordering at least the most relevant questions according to their relevance for both the attendees 9 and the presenter 8. Based on said ordered questions the presenter 8 can then select at least one question to answer it.

Said ordering module 56 is designed to provide an ordered set of questions that best matches both expectations of the attendees 9 and constraints of the presenter 8.

According to a preferred embodiment, expectations of the attendees 9 may be extracted form question repository 10 by analyzing questions contained herein. Said analyze may e.g. consider the relevance of a question according to the number or occurrences of said question. If questions have been previously grouped by similarity groups a question is as relevant as its group is large.

According to an alternate embodiment, expectations of the attendees 9 may be derived from an analysis of at least some of the metadata associated to questions. For example if a vote is associated to questions, the obtained vote score could be considered to be indicative of the relevance of a question as considered by the attendees 9.

Both preceding embodiments can also be used complementarily. In this case a relevance of a question is derived by summing the votes obtained by all the questions gathered into a given group. So, if a group is representative of at least one topic, the relevance is considered based on a topic and not only on a question.

Besides the expectations of the attendees 9, the presenter 8 may have or choose some constraints to drive the selection of questions to answer. To benefit from the mass of structured information available to the system in the question repository 10, presentation context(s), attendee profiles, the presenter 8 can express some constraints e.g. in the form of rules to be used by said ordering module 56 to choose the relevant questions.

A rule may be expressed using condition parameters matching some information available to the system 1. Said parameters can be chosen among: maximum number of questions per attendee, per location, per slides or per videos, profiles of attendees in order to focus on or to privilege (a) given company(ies), or persons with a given position, content of questions (heterogeneous topics, questions near of a given topic), scheduling of questions (by slide, by location, by topic...).

For example the presenter 8 may use at least one rule to e.g. emphasize, or on the contrary to avoid or forbid a particular topic, or to privilege questions submitted by a given attendee 9, or by attendees 9 of a given company, or by attendees 9 of a given position in their respective companies, as can be extracted from their attendee profiles.

As another example the presenter 8 may use at least one rule to e.g. emphasize/forbid questions that have been given (or not) a great number of (right) proposed answers.

As can appear to the one skilled in the art, due to the quantity of information available to the system 1, the possibilities of said rules are quite endless and can prove to be very powerful and useful.

As a way of homogenize the process, the expectations of the attendees can also be included in the form of at least one rule.

Whatever the method chosen, a relevance score for each question or a relative relevance between any two questions can be established thus allowing questions to be sorted/ordered according to their respective relevance, under some constraints expressed by rules. The ordering module 56 can thus delivers a set composed of a given number of questions extracted from the question repository 10 and sorted in accordance with their relevance, to the attention of the presenter 8. The presenter 8 can then select at least one question to be answered from said set.

When a question is so selected by the presenter 8 to be answered, the system 1 can take advantage of the context restoration module 57 to further help.

The system 1 helps the attendees 9 and the presenter 8 all along the presentation. Questions are compiled into the question repository 10 mainly during the initial display phase. It can be noted that the way used by the system 1 to gather questions, is advantageous in that a question can be submitted during the course of the display phase, without the need to interrupt the presenter 8. During the following questions and answers phase, information related to the presentation and to the questions so gathered by the system 1 into the question repository 10 may be useful to support said questions and answers phase.

The context restoration module 57, in conjunction with the aforementioned context management module 54 can further helps the presenter 8, when said presenter 8 selects a question to answer it, by providing a restored context similar to the one used when the question was submitted. This restores a context similar to the one in which the question was created. This may be of help for both the presenter 8 to answer said selected question with a related support and for the attendees 9 to help them understanding the context and thus the selected question and also the answer given.

According to another embodiment, said context restoration module 57 further comprises means for establishing a communication between the presenter 8 and at least one of the attendees 9 which edited said selected question.

Said communication may take several forms. Once a question is selected by the presenter 8, based on the metadata associated to said question, it is possible to identify contributors to said question. Depending on their number, they can all be selected. Alternately, at least one of them, e.g. the first editor/creator, or the editor of the most important amendment, or the editor with the broadest expertise on the topic of the question may be selected.

Said selection may triggers a quotation of said contributor, by either naming said contributor, or even displaying an introduction note. To do so said context restoration module 57 may further comprise an introduction builder for building an introduction of an attendee 9. Said introduction is built from information found in his/her attendee profile. Said introduction can be displayed on the main conference room display(s) or may also be dispatched by the system 1 to all client applications 3.

Alternately or complementarily an audio communication may be directly established between said contributor and the presenter 8, for e.g. enabling said contributor to present himself said selected question or his contribution to all the attendees 9 as he/she would be a presenter, or to publicly discuss the selected question/contribution with the presenter 8.

According to another embodiment, the context restoration module 57 may further comprise a question displayer. Said question displayer is in charge, once a question has been selected by the presenter 8, to display said question. Said display may comprise at least the text of said selected question but also any metadata associated to said selected question.

According to another embodiment, the context restoration module 57 may further comprise a question reader. Said question reader is in charge, once a question has been selected by the presenter 8, to read said selected question. Said reading can be done in different selective ways. Classically the question can be read by the presenter 8. Alternately, provided an audio communication has been previously established by the system 1 between the presenter 8 and an attendee 9, e.g. the first creator of said question or the broadest contributor to said question or any other contributor, the question can be read by said attendee 9. Alternately, since said question is present in text form in the system 1, it is also possible to have said selected question read by a text to speech application/device. Such a feature can be of great advantage to avoid problems of sound quality or accent.

One advantage of the disclosed system 1 is that a virtual community is created between the attendees 9 and the presenter 8. Said community is not limited to the duration of the presentation and may e.g. be carried on later, e.g. by email, so as to provide answers to not selected questions. Answers can so be provided by the presenter 8, or also by some authorized (or not) attendee 8. Any answer so provided by one of the attendees 9 can be (or not) validated by the presenter 8.

Another advantage of the disclosed system 1 is said question repository 10 comprises a rich content about the presentation, in written and structured form. This can provide a good basis for a survey or proceeding of the presentation.

The present disclosure has been detailed upon a centralized server/client organization: any amended question is first sent to the server 5. It is apparent for the one skilled in the art that a distributed organization could also be used: any amended question is directly broadcast by an editing client 2 to all the other ones.

## Claims

1. A client application (3) for managing questions during a presentation comprising:
- a question editor module (31) for enabling an attendee (9) to edit a question: creating, modifying or enriching said question,
- a sender module (32) for sending to a server application (5) a question locally edited using said question editor module (31), and
- a receiver module (33) for receiving from said server application (5) a remotely edited question.

2. The client application of claim 1 further comprising a profile adder module (34) for adding, to an edited question, an attendee profile of an attendee (9) which edited said question.

3. The client application of any one of claims 1 to 2, wherein a question is enriched by adding metadata that can be edited, so as to: define semantic relations between questions, or define hierarchy between questions, or merge questions, or add vote about question's relevance, or create/modify a proposed answer.

4. A server application (5) for managing questions during a presentation comprising:
- a collector module (52) for collecting questions received from at least one client application (3),
- a dispatcher module (53) for dispatching questions to at least one client application (3),
- a maintenance module (51) for maintaining a question repository (10) and for avoiding editing conflicts,
- a context management module (54) for collecting and maintaining a presentation context,
- a linker module (55) for linking similar questions,
- an ordering module (56) for ordering questions, and
- a context restoration module (57) for restoring a given presentation context.

5. The server application of claim 4 wherein a presentation context comprises: name of presenter, title of presentation, support used by presenter.

6. The server application of any one of claims 4 to 5, wherein said linker module (55) comprises a topic extractor for extracting topics from questions, a similarity detector for detecting a level of similarity by comparing said extracted topics based on a cosine similarities method, and a grouper for grouping similar questions as denoted by a value of a cosine superior to a given threshold.

7. The server application of any one of claims 4 to 6, wherein said ordering module is designed to best match expectations of attendees (9) and constraints of presenter (8).

8. The server application of claim 7, wherein said expectations of attendees are extracted from question repository (10) by analyzing questions and/or at least some of their metadata.

9. The server application of any one of claims 7 or 8, wherein said constraints of the presenter can be defined by way of rules taking their parameters among:
- maximum number of questions per attendee, per location, per slide or per video,
- profiles of attendees, in order to focus on or to privilege (a) given company(ies), or persons with a given position,
- content of questions (heterogeneous topics, questions near of a given topic),
- scheduling of questions (by slide, by location, by topic...).

10. The server application of any one of claims 4 to 9, wherein said context restoration module (57) comprises means for restoring a presentation context associated to a selected question.

11. The server application of any one of claims 4 to 10, wherein said context restoration module (57) further comprises means for establishing a communication between the presenter (8) and at least one of the attendees (9) which edited said selected question.

12. The server application of any one of claims 4 to 11, wherein said context restoration module (57) further comprises an introduction builder for building an introduction of an attendee (9) from his/her attendee profile.

13. The server application of any one of claims 4 to 12, wherein said context restoration module (57) further comprises a question displayer for displaying the text of a selected question and/or any metadata associated to said selected question.

14. The server application of any one of claims 4 to 13, wherein said context restoration module (57) further comprises a question reader for reading a selected question, in different selective ways:
- by an attendee (9),
- by the presenter (8), or
- by a text to speech application.

15. A system (1) for managing questions during a presentation comprising:
- a server (4) running a server application (5) according to any one of claims 1 to 3,
- at least one client (2) running a client application (3) according to any one of claims 4 to 14, said at least one client application (3) being located in a mobile terminal associated to an attendee (9), attending said presentation,
- a communication network (8) allowing said at least one client application (3) to communicate with said server application (5).

## Amended claims

### Amended claims in accordance with Rule 137(2) EPC.

**1.** A client application (3) for managing questions during a presentation comprising:
- a question editor module (31) for enabling an attendee (9) to edit a question: creating, modifying or enriching said question,
- a sender module (32) for sending to a server application (5) a question locally edited using said question editor module (31), and
- a receiver module (33) for receiving from said server application (5) a remotely edited question.

**2.** The client application of claim 1 further comprising a profile adder module (34) for adding, to an edited question, an attendee profile of an attendee (9) which edited said question.

**3.** The client application of any one of claims 1 to 2, wherein a question is enriched by adding metadata that can be edited, so as to: define semantic relations between questions, or define hierarchy between questions, or merge questions, or add vote about question's relevance, or create/modify a proposed answer.

**4.** A server application (5) for managing questions during a presentation comprising:
- a collector module (52) for collecting questions received from at least one client application (3),
- a dispatcher module (53) for dispatching questions to at least one client application (3),
- a maintenance module (51) for maintaining a question repository (10) and for avoiding editing conflicts,
- a context management module (54) for collecting and maintaining a presentation context,
- a linker module (55) for linking similar questions,
- an ordering module (56) for ordering questions, and
- a context restoration module (57) for restoring a given presentation context.

**5.** The server application of claim 4 wherein a presentation context comprises: name of presenter, title of presentation, support used by presenter.

**6.** The server application of any one of claims 4 to 5, wherein said linker module (55) comprises a topic extractor for extracting topics from questions, a similarity detector for detecting a level of similarity by comparing said extracted topics based on a cosine similarities method, and a grouper for grouping similar questions as denoted by a value of a cosine superior to a given threshold.

**7.** The server application of any one of claims 4 to 6, wherein said ordering module is designed to best match expectations of attendees (9) and constraints of presenter (8).

**8.** The server application of claim 7, wherein said expectations of attendees are extracted from question repository (10) by analyzing questions and/or at least some of their metadata.

**9.** The server application of any one of claims 7 or 8, wherein said constraints of the presenter can be defined by way of rules taking their parameters among:
- maximum number of questions per attendee, per location, per slide or per video,
- profiles of attendees, in order to focus on or to privilege (a) given company(ies), or persons with a given position,
- content of questions (heterogeneous topics, questions near of a given topic),
- scheduling of questions (by slide, by location, by topic...).

**10.** The server application of any one of claims 4 to 9, wherein said context restoration module (57) comprises means for restoring a presentation context associated to a selected question.

**11.** The server application of any one of claims 4 to 10, wherein said context restoration module (57) further comprises means for establishing a communication between the presenter (8) and at least one of the attendees (9) which edited said selected question.

**12.** The server application of any one of claims 4 to 11, wherein said context restoration module (57) further comprises an introduction builder for building an introduction of an attendee (9) from his/her attendee profile.

**13.** The server application of any one of claims 4 to 12, wherein said context restoration module (57) further comprises a question displayer for displaying the text of a selected question and/or any metadata associated to said selected question.

**14.** The server application of any one of claims 4 to 13, wherein said context restoration module (57) further comprises a question reader for reading a selected question, in different selective ways:
- by an attendee (9),
- by the presenter (8), or
- by a text to speech application.

**15.** A system (1) for managing questions during a presentation comprising:
- a server (4) running a server application (5) according to any one of claims 4 to 14,
- at least one client (2) running a client application (3) according to any one of claims 1 to 3, said at least one client application (3) being located in a mobile terminal associated to an attendee (9), attending said presentation,
- a communication network (8) allowing said at least one client application (3) to communicate with said server application (5).
